# EUROPÄISCHE PATENTSCHRIFT

(11) **EP 2 320 291 B1**
(45) Veröffentlichungstag und Bekanntmachung des Hinweises auf die Patenterteilung: **28.11.2012**
(21) Anmeldenummer: 10004789.3
(22) Anmeldetag: 06.05.2010
(51) Int. Cl.: G05D 16/10

(54) **Druckventil- bzw. Druckregelungsvorrichtung**
Pressure valve and pressure regulator
Vanne et dispositif de régulation de pression

(30) Priorität: 30.10.2009 CH 16682009
(43) Veröffentlichungstag der Anmeldung: 11.05.2011
(73) Patentinhaber: Liebherr Machines Bulle SA, 1630 Bulle (CH)
(72) Erfinder: Monney, Roland, 1728 Rossens (CH); Scheurer, Jean-Marc, 1635 La Tour-de-Trême (CH); Joly, Grégoire, 1638 Hauteville (CH)
(74) Vertreter: Laufhütte, Dieter

(56) Entgegenhaltungen:
- EP-A1- 0 103 349
- EP-A1- 0 249 154
- US-A- 4 302 937

## Beschreibung

Die vorliegende Erfindung betrifft ein Druckventil- bzw. Druckregelungsvorrichtung.

Dem Fachmann sind zahlreiche Arten von Druckventilen und Druckreglern bekannt, die sich in ihrer Funktion voneinander unterscheiden. Dabei werden die verschiedenen Arten von Druckventilen und Druckreglern innerhalb verschiedener Systeme mit verschiedenen Druckübertragungsmedien, insbesondere Hydrauliksysteme, Pneumatiksysteme, verwendet, um jeweils eine Funktion zur Steuerung des herrschenden Drucks innerhalb des Kreislaufs zu erfüllen.

Beispielhaft sei hier die Kategorie der Druckbegrenzungsventile genannt, die zu den allseitsbekannten Sicherheitsventilen gehören und dazu dienen, den Betriebsdruck einer Anlage auf einen vorbestimmten einstellbaren Wert zu begrenzen, um die Zerstörung von Anlageteilen, wie Rohren, Schläuchen, Verbindungen usw. zu vermeiden.

Zu einer anderen Kategorie von Druckventilen bzw. den Druckreglern gehören sogenannte Betriebsdruckventile, die im allgemeinen Fachjargon auch als Druckregel - oder Druckreduzierventile bekannt sind. Die Aufgabe dieser Ventile liegt darin, einen möglichst konstanten Betriebsdruck zu bestimmen, der unabhängig von der Temperatur bzw. der Viskosität des Druckmediums ist.

Die EP 0 103 349 A1 offenbart ein einstellbares Druckregelungsventil, wobei innerhalb eines Ventilblocks ein Überdruckventil und ein Druckregelungsventil angeordnet sind.

Die EP 0 249 154 A1 schlägt ein Druckregelventil vor, das ebenfalls innerhalb eines gemeinsamen Ventilgehäuses ein Druckbegrenzungs- sowie ein Druckregelventil vorsieht.

Die US 4,302,937 zeigt eine weitere Druckregelungsvorrichtung, die zwei Ventilfunktionen innerhalb eines einzigen Gehäuses vereint.

Die vorliegende Erfindung beschäftigt sich mit der Problematik, dass innerhalb eines hydraulischen Systems zur Umsetzung der geforderten Funktionen eine Reihe von verschiedenen Druckventilen verwendet werden müssen. Dies bedeutet jedoch gleichzeitig, dass die Verwendung von mehreren Ventilen einen erhöhten Platzbedarf erforderlich macht.

Die Aufgabe der vorliegenden Erfindung besteht also darin, ein Druckventil- bzw-Druckregelungsvorrichtung zu entwickeln, die die Funktionalität von mindestens zwei verschiedenartigen Ventilen bzw. Reglern miteinander verbindet.

Die vorliegende Erfindung wird durch die Merkmalskombination des Anspruchs 1 gelöst. Ein derartige Vorrichtung, im Folgenden einfach als Druckventil bezeichnet, bietet zum einen die Funktion zur Bestimmung eines konstanten Betriebsdruckes und zum anderen die Funktionalität eines bekannten Sicherheitsdruckbegrenzungsventils. Das Druckventil besteht aus einem Ventilblock oder Ventilpatronen, im Nachfolgenden der Einfachheit halber allgemein als Ventilblock bezeichnet, der eine erste und zweite Einflussöffnung und eine Ausflussöffnung aufweist. Innerhalb des Ventilblocks sind zwei Ventilelemente angeordnet, die jeweils für sich beweglich gelagert sind. Ferner ist ein Federelement vorgesehen, das auf das erste Ventilelement einwirkt. Das erste Ventilelement weist eine Druckangriffsfläche auf, welche der Federkraft entgegenwirkt. Am zweiten Ventilelement sind eine erste und zweite Druckangriffsfläche vorgesehen, die zueinander gegensinnig gerichtet am Ventilelement angeordnet sind.

Die erfindungsgemäße Druckventil- bzw. Druckregelungsvorrichtung dient zum Einsatz innerhalb eines Drucksystems, wobei verschiedenartige Druckübertragungsmedien denkbar sind. Beispielhaft seien hier Hydrauliksysteme und Pneumatiksysteme genannt. Der Einfachheit halber wird das Wirkprinzip der erfindungsgemäβen Druckventil- bzw. Druckregelungsvorrichtung nachfolgend anhand eines Hydrauliksystems mit Hydraulikflüssigkeit erläutert, ist jedoch keineswegs auf Hydrauliksystems beschränkt.

Das erste Ventilelement mit seiner Druckangriffsfläche dient zur Umsetzung der Funktion des Sicherheitsdruckbegrenzungsventils. Übersteigt die auf die Druckangriffsfläche einwirkende Druckkraft die entgegengerichtete Federkraft, so wird das erste Ventilelement verschoben und die Auslassöffnung des Ventilblocks wird geöffnet, so dass ein Abfluß des Hydraulikmediums zur Reduzierung des anliegenden Drucks erfolgen kann.

Der an der ersten Druckangriffsfläche des zweiten Ventilelements anliegende Druck eines Hydraulikmediums regelt bzw. bestimmt den konstanten Betriebsdruck innerhalb eines hydraulischen Systems. In diesem Fall arbeitet das zweite Ventilelement in Kontakt mit dem ersten Ventilelement, wodurch ein konstanter Betriebsdruck innerhalb eines an dem Ventil angeschlossenen hydraulischen Systems bestimmbar ist.

Ist die an der zweiten Druckangriffsfläche des zweiten Ventilelements einwirkende Druckkraft größer als die an der ersten Druckangriffsfläche einwirkende Druckkraft, so wird das zweite Ventilelement längsverschoben, wodurch erstes und zweites Ventilelement nicht mehr in Kontakt stehen. In diesem Zustand arbeitet das Druckventil als Sicherheitsdruckbegrenzungsventil, wobei nur der an der Druckangriffsfläche des ersten Ventilelements anliegende Druck entscheidend ist.

Möglich ist auch eine Druckventilvariante mit mehr als zwei Ventilelementen zur Realisierung weiterer Ventilstufen. Herzu wären ebenso weitere Zuflüsse erforderlich.

Die Federkraft definiert das maximale Druckniveau, bei dessen Überschreitung das Druckventil öffnet. Um diese Grenze variabel zu gestalten, ist es vorteilhaft, dass die Federkraft der wenigstens einen Feder verstellbar ist.

Von Vorteil ist, wenn das erste Ventilelement als ein Längsschieber ausgeführt ist. Der Längsschieber ist in Richtung seiner Längsachse beweglich innerhalb des Ventilblocks gelagert. Zur Entwicklung der Federkraft auf den Längsschieber, ist wenigstens eine Feder zwischen einer Stirnseite des Längsschiebers und der Ventilblockwand angeordnet. Auf der gegenüberliegenden Stirnseite des Längsschiebers befindet sich die Druckangriffsfläche des Längsschiebers, wodurch die dort anliegende Hydraulikmediumsdruckkraft der Federkraft entgegenwirkt.

Denkbar ist, dass das zweite Ventilelement als Messkolben ausgebildet ist. Der Messkolben ist ebenfalls in Richtung seiner Längsachse beweglich gelagert und weist eine zylinderartige Form auf. Bevorzugt stellt die außen liegende Bodenfläche des zylinderartigen Messkolbens die erste Druckangriffsfläche dar und die innen liegende Bodenfläche umfasst die der ersten Druckangriffsfläche gegensinnig gerichtete zweite Druckangriffsfläche.

Besonders vorteilhaft ist, dass beide Ventilelemente entlang einer axialen Richtung beweglich gelagert sind. Hierdurch lassen sich die beiden Ventilelemente entweder gemeinsam in axialer Richtung verschieben oder das zweite Ventilelement lässt sich auf das erste Ventilelement hinzu oder von diesem weg verschieben oder das erste Ventilelement ist alleine verschiebbar.

In einer bevorzugten Ausführungsvariante des erfindungsgemäßen Druckventils führt die zweite Einflussöffnung zur ersten Druckangriffsfläche des zweiten Ventilelements und die erste Einflussöffnung führt zur Druckangriffsfläche des ersten Ventilelements. Beispielsweise stellen die beiden Einflussöffnungen unterschiedliche Druckmesspunkte innerhalb eines hydraulischen Systems dar. Entweder arbeitet das zweite Ventilelement in Kontakt mit dem ersten Ventilelement und das Drucksignal der zweiten Einlassöffnung bestimmt den Kreislaufdruck innerhalb des an das Druckventil angeschlossenen hydraulischen Systems. Alternativ arbeitet das erste Ventilelement allein und das Drucksignal der ersten Einflussöffnung bestimmt den Kreislaufdruck des angeschlossenen hydraulischen Systems. Weiterhin bestimmt die über die erste Einflussöffnung erzeugte Druckkraft auf die zweite Druckangriffsfläche des zweiten Ventilelements, ob das zweite Ventilelement in Kontakt mit dem ersten Ventilelement arbeitet.

Es kann vorgesehen sein, dass die Ausflussöffnung in der Ruhestellung des Ventils durch das erste Ventilelement verschlossen ist. Beispielsweise wird in diesem Ventilzustand kein Hydraulikmedium zur Reduzierung des Kreislaufdrucks abgegeben.

Vorteilhaft existiert im Schaltzustand des Druckventils ein Durchfluß zwischen erster Einflussöffnung und der Auslassöffnung. Übersteigt der Druck innerhalb des Kreislaufs das maximal zulässige Druckniveau, so wirkt das erfindungsgemäße Druckventil als Sicherheitsdruckbegrenzungsventil und ein Durchfluß zwischen der ersten Einflussöffnung und der Ausflussöffnung wird geschaltet. Damit wird zur Reduzierung des Drucks ein Teil des Hydraulikmediums über die Ausflussöffnung abgegeben.

Vorteilhafterweise ist die Fläche, insbesondere die Querschnittsfläche der ersten Druckangriffsfläche des zweiten Ventilelements größer als die Fläche der Druckangriffsfläche des ersten Ventilelements. Durch die vorteilhafte Dimensionierung der Druckangriffsflächen lassen sich die zwei Funktionen des Druckventils besonders günstig innerhalb des erfindungsgemäßen Druckventils verwirklichen. Aufgrund der unterschiedlichen Druckangriffsflächendimensionierung sind unterschiedliche Drücke an den Druckangriffstellen zur Erzeugung einer Druckkraft nötig, welche die entgegenwirkende Federkraft übersteigt und ein Verschieben zumindest eines Ventilelements nach rechts in eine Schaltstellung erwirkt. Die an der ersten Druckangriffsfläche des zweiten Ventilelements einwirkende Druckkraft steuert den konstanten Betriebsdruck innerhalb des Kreislaufs. Der an der zweiten Druckangriffsfläche des zweiten Ventilelements herrschende Druck steht diesem entgegen. Übersteigt die Kraft infolge des herrschenden Druckes an der ersten Druckangriffsfläche die Kraft infolge des Druckes an der zweiten Druckangriffsfläche des zweiten Ventilelements proportional zur Dimensionierung der Druckangriffsflächen, so wird das zweite Ventilelement in Richtung des ersten Ventilelements verschoben bis die beiden Ventilelemente in Kontakt treten. Im Gegensatz dazu führt ein Ansteigen des Drucks am zweiten Druckangriffspunkt des zweiten Ventilelements dazu, dass das zweite Ventilelement in entgegengesetzter Richtung vom ersten Ventilelement wegbewegt wird.

Denkbar ist auch, dass das erste Ventilelement eine Bohrung in Längsrichtung aufweist, damit am ersten Ventilelement ein Druckausgleich erreicht wird.

Die vorliegende Erfindung soll nun anhand des in den Zeichnungen dargestellten Ausführungsbeispiels näher erläutert werden. Es zeigen:
- Figur 1:: das erfindungsgemäße Druckventil- bzw. Druckregelungsvorrichtung innerhalb eines hydraulischen Kreislaufs in einer ersten Betriebsstellung und
- Figur 2:: das erfindungsgemäße Druckventil- bzw. Druckregelungsvorrichtung innerhalb eines hydraulischen Kreislaufs in einer zweiten Betriebsstel- lung.

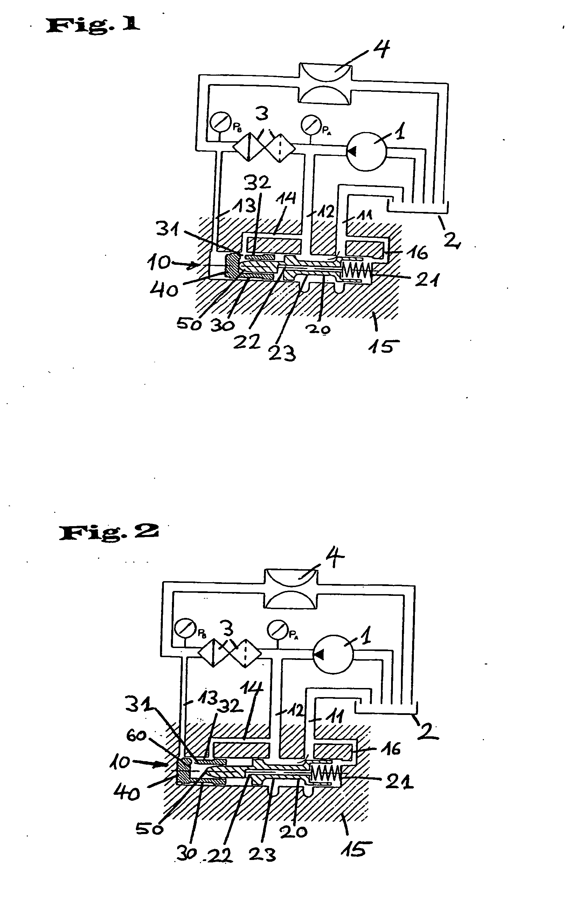

Die Figuren 1 und 2 zeigen die erfindungsgemäße Druckventil- bzw. Druckregelungsvorrichtung 10, im Folgenden als einfach als Druckventil 10 bezeichnet, innerhalb eines offenen Hydraulikkreislaufs. Der Kreislauf besteht aus einem Tank 2 zur Speicherung von Hydraulikflüssigkeit. Die Hydraulikpumpe 1 saugt das Hydraulikmedium aus dem Tank 2 an und führt dieses über eine Leitung einer Einheit 3 aus Filter und Kühler zu. Vor der Einheit 3 aus Filter und Kühlerelement erfolgt eine Abzweigung der Hydraulikflüssigkeitsleitung, die der ersten Einflussöffnung 12 des Druckventils 10 zugeführt wird. Der von der Pumpe 1 erzeugte Förderdruck vor der Einheit 3 aus Filter und Kühler wird durch das Symbol P_{A} symbolisiert.

Die Einheit 3 dient zur Filterung von Rückständen innerhalb der Hydraulikanlage bzw. zur Kühlung des verwendeten Hydraulikmediums. Der anliegende Druck nach der Einheit 3 aus Kühler und Filter trägt den Index P_{B}. Die Hydraulikleitung zwischen Einheit 3 und einem Verbraucher 4 wird durch eine weitere Leitung verzweigt und an die zweite Einlassöffnung 13 des erfindungsgemäßen Druckventils 10 angeschlossen. Die vom Verbraucher 4 abgegebene Hydraulikflüssigkeit wird über eine weitere Leitung an den Tank 2 zurückgeführt. Ebenso ist die Ausflussöffnung 11 des erfindungsgemäßen Druckventils 10 mit dem Tank 2 verbunden.

Das erfindungsgemäße Druckventil 10 dient zur Realisierung von zwei Ventilfunktionen. Zum einen dient das Druckventil 10 zur Bestimmung bzw. Regulierung eines konstanten Betriebsdrucks innerhalb des offenen Hydraulikkreislaufs. Diese Regulierung soll möglichst unabhängig von der Temperatur bzw. der Viskosität des verwendeten Hydraulikmediums erfolgen. Das Ausführungsbeispiel aus den Figuren 1 und 2 soll z. B. ein konstantes Betriebsdruckniveau von 5 bar erzielen. Zusätzlich arbeitet das erfindungsgemäße Druckventil als Sicherheitsdruckbegrenzungsventil, das bei Erreichen eines maximal zulässigen Druckniveaus von 10 bar die Auslauföffnung 11 öffnet und Hydraulikflüssigkeit zur Reduzierung des Druckniveaus an den Tank 2 abgibt. In dem dargestellten offenen Hydraulikkreislauf wird ein Überschreiten des maximal zulässigen Druckniveaus z. B. durch einen verstopften Kühler bzw. Filter der Einheit 3 ausgelöst.

Das erfindungsgemäße Druckventil 10 weist einen Ventilblock 15 auf, der eine erste und zweite Einflussöffnung 12, 13 sowie eine Ausflussöffnung 11 aufweist. Im Inneren des Ventilblocks 15 ist innerhalb eines zylindrischen Hohlraums ein Längsschieber 20 und ein Messkolben 30 längsbeweglich in Richtung einer horizontal liegenden Achse gelagert. Die Feder 21 ist zwischen dem Längsschieber 20 und der Wand des Ventilblocks 15 innerhalb des zylindrischen Hohlraums angeordnet. Die Federkraft der Feder 21 entspricht im Ausführungsbeispiel einer Druckkraft von 10 bar an der Druckangriffsfläche des Längsschiebers 20 und führt dazu, dass der Längsschieber 20 in der Ruhestellung entlang der horizontal verlaufenden Bewegungsachse nach links verschoben wird. Die linksseitige Stirnseite 50 des Längsschiebers 20 stellt diese Druckangriffsfläche dar.

Ferner ist ebenfalls innerhalb des zylinderförmigen Hohlraums des Ventilblocks 15 der zylinderartig ausgebildete Messkolben 30 längsbeweglich angeordnet. Der Längsschieber 20 erstreckt sich einseitig mit seiner Druckangriffsfläche 50 in den Innenraum des Messkolbens 30 hinein. Die außen liegende Bodenfläche 40 des Messkolbens 30 stellt die erste Druckangriffsfläche des Meßkolbens 30 innerhalb des erfindungsgemäßen Druckventils 10 dar. Die innen liegende Bodenfläche 60 des Messkolbens 30 bietet die zweite Druckangriffsfläche des Druckventils 10, welche der ersten Druckangriffsfläche 40 gegensinnig gerichtet ist. Die Zylinderwand des Messkolbens 30 sieht eine Ausnehmung 31 vor, durch welche ein Hydraulikmedium in den Innenraum des Messkolbens 30 einfließen kann. Der Messkolben 30 kann entlang der horizontal liegenden Achse derart bewegt werden, so dass entweder die außen liegende Bodenfläche 40 des Messkolbens 30 in Anstoß mit der Gehäusewand des Ventilblocks 15 liegt oder alternativ soweit nach rechts bewegt werden, so dass die innen liegende Bodenfläche 60 in Kontakt mit der Stirnseite 50 des Längsschiebers 20 steht.

Der Längsschieber 20 weist eine Ringausnehmung 23 auf. Der linksseitige Abschnitt des Längsschiebers 20 ist beispielsweise bombiert ausgeführt. Es kann aber auch keglig oder stufenweise ausgeführt sein. Wichtig ist nur, dass der Ölzufluss in jeder Ventilstellung ermöglicht wird. Die erste Einflussöffnung 12 führt in die Ringausnehmung 23 des Längsschiebers 20 und füllt den entstehenden Raum zwischen Längsschieber 20 und Ventilblock 15 mit Hydraulikflüssigkeit.

Der Messkolben 30 sieht eine weitere Ringausnehmung 32 vor, die die Durchführung 31 in den Hohlraum des Messkolbens 30 aufweist. Die Abzweigung 14 der Einflussöffnung 12 führt zur Ringausnehmung 32 des Messkolbens 30, wodurch mit dem Druck P_{A} Hydraulikflüssigkeit in den Hohlraum des Messkolbens 30 gefördert wird. Die Einflussöffnung 13 erschließt sich in den Hohlraum des Ventilblocks 15 im Bereich zwischen Ventilblockwand und außen liegender Bodenfläche 40 des Messkolbens 30.

In der Ventilstellung aus Figur 1 befindet sich der Messkolben 30, insbesondere die innen liegende Bodenfläche 60 des Messkolbens 30 in Kontakt mit der linksseitigen Stirnseite des Längsschiebers 20. Durch die Stellung von Messkolben 30 und Längsschieber 20 bestimmt der Druck P_{B}, der auf der außen liegenden Bodenfläche 40 des Messkolbens 30 einwirkt, den Kreislaufdruck innerhalb des offenen Kreislaufs. Falls die auf die Fläche 40 einwirkende Druckkraft größer als die Federkraft der Feder 21, dann wird der Messkolben 30 zusammen mit dem Längsschieber 20 in horizontaler Richtung nach rechts bewegt, so dass die Ringausnehmung 23 des Längsschiebers 20 unterhalb der Auslassöffnung 11 liegt. Hierdurch wird ein Durchfluß der Einlassöffnung 12 zur Auslassöffnung 11 ermöglicht und der Druck innerhalb des Kreislaufs wird reguliert. Damit lässt sich der herrschende Druck innerhalb des Kreislaufs konstant auf einem beliebigen Druckniveau halten.

Übersteigt der anliegende Druck P_{A} ein bestimmtes Druckniveau aufgrund eines verstopften Kühler- oder Filterelements 3, so verschiebt sich der Messkolben 30 nach links entlang der horizontal liegenden Achse, wie in Figur 2 ersichtlich ist. In dieser Konstellation arbeitet der Längsschieber 20 allein und das Drucksignal P_{A} bestimmt den Kreislaufdruck. Über die Leitung 14 wird das Hydraulikmedium in den Hohlraum des Messkolbens 30 befördert und eine Druckkraft wirkt auf die Stirnfläche 50 des Längsschiebers 20 ein. Übersteigt die durch den Druck P_{A} auf die Druckangriffsfläche 50 einwirkende Druckkraft die Federkraft des Federelements 21, so wird alleine der Längsschieber 20 nach rechts in horizontaler Richtung verschoben, so dass wiederum ein Durchfluß zwischen Einlassöffnung 12 und Auslassöffnung 11 erzielt wird. Die Druckkraft des Signals P_{A} bestimmt dabei, ob der Messkolben 30 in Kontakt mit dem Längsschieber 20 arbeitet oder ob dieser durch die Druckkraft auf die Druckangriffsfläche 60 vom Längsschieber 20 wegbewegt wird.

Aufgrund der unterschiedlichen Dimensionierung der Druckangriffsflächen 40, 50 sind unterschiedliche Drücke ausreichend, um eine Druckkraft an der jeweiligen Druckangriffsfläche 40, 50 zu entwickeln, die der Federkraft ausreichend entgegenwirkt, um ein Verschieben des Längsschiebers 20 zu erwirken. Im Ausführungsbeispiel ist ein geringerer Druck P_{B} von etwa 6 bis 7 bar ausreichend um dem Messkolben 30 zusammen mit dem Längsschieber nach rechts zu bewegen. Um den Längsschieber alleine nach rechts zu verschieben, ist dazu aufgrund der kleineren Druckangriffsfläche 50 ein wesentlich höherer Druck P_{A} erforderlich.

## Patentansprüche

1. Druckventil- bzw. Druckregelungsvorrichtung (10) für beliebige Druckübertragungsmedien mit einem Ventilblock (15) und/oder Patrone, der mindestens eine erste und zweite Einflussöffnung (12, 13) und eine Ausflussöffnung (11) aufweist, und mit mindestens zwei beweglich innerhalb des Ventilblocks (15) gelagerten Ventilelementen (20, 30), wobei das erste Ventilelement (20) eine entgegen mindestens eine Feder (21) wirkende Druckangriffsfläche (50) bietet und das zweite Ventilelement (30) zwei einander gegensinnig gerichtete Druckangriffsflächen (40, 60) aufweist,
**dadurch gekennzeichnet,**
**dass** das zweite Ventilelement (30) mit dem ersten Ventilelement (20) in Kontakt bringbar ist.

2. Druckventil- bzw. Druckregelungsvorrichtung (10) nach Anspruch 1, **dadurch gekennzeichnet, dass** die Federkraft der wenigstens einen Feder (21) verstellbar ist.

3. Druckventil- bzw. Druckregelungsvorrichtung (10) nach Anspruch 1 oder 2, **dadurch gekennzeichnet, dass** das erste Ventilelement (20) ein Längsschieber ist.

4. Druckventil- bzw. Druckregelungsvorrichtung (10) nach Anspruch 1,2 oder 3, **dadurch gekennzeichnet, dass** das zweite Ventilelement (30) einem Messkolben entspricht.

5. Druckventil- bzw. Druckregelungsvorrichtung (10) nach einem der vorhergehenden Ansprüche, **dadurch gekennzeichnet, dass** die beiden Ventilelemente (20, 30) entlang einer axialen Richtung beweglich gelagert sind.

6. Druckventil- bzw. Druckregelungsvorrichtung (10) nach einem der vorhergehenden Ansprüche, **dadurch gekennzeichnet, dass** die zweite Einflussöffnung (13) zur ersten Druckangriffsfläche (40) des zweiten Ventilelements (30) führt und die erste Einflussöffnung (12) zur Druckangriffsfläche (50) des ersten Ventilelements (30) führt.

7. Druckventil- bzw. Druckregelungsvorrichtung (10) nach einem der vorhergehenden Ansprüche, **dadurch gekennzeichnet, dass** die Ausflussöffnung (11) in der Ruhestellung des Ventils durch das erste Ventilelemente (20) verschlossen ist.

8. Druckventil- bzw. Druckregelungsvorrichtung (10) nach einem der vorhergehenden Ansprüche, **dadurch gekennzeichnet, dass** im Schaltzustand ein Durchfluß zwischen erster Einflussöffnung (12) und Auslassöffnung (11) existiert.

9. Druckventil- bzw. Druckregelungsvorrichtung (10) nach einem der vorhergehenden Ansprüche, **dadurch gekennzeichnet, dass** die Fläche der ersten Druckangriffsfläche (40) des zweiten Ventilelements (30) größer ist als die Druckangriffsfläche (50) des ersten Ventilelements (20).

10. Druckventil- bzw. Druckregelungsvorrichtung (10) nach einem der vorhergehenden Ansprüche, **dadurch gekennzeichnet, dass** die Fläche der ersten Druckangriffsfläche (40) des zweiten Ventilelements (30) größer ist als die zweite Druckangriffsfläche (60) des zweiten Ventilelements (30).

11. Druckventil- bzw. Druckregelungsvorrichtung (10) nach einem der vorhergehenden Ansprüche, **dadurch gekennzeichnet, dass** das erste Ventilelement (20) eine Bohrung (22) in Längsrichtung aufweist.

## Claims

1. Pressure valve and pressure regulator (10) for any pressure transfer media with a valve block (15) and/or cartridge having at least a first and second inflow opening (12, 13) and an outflow opening (11), and with at least two flexible valve elements (20, 30) mounted within the valve block (15), wherein the first valve element (20) features a pressure application surface (50) which acts against at least one spring (21), and wherein the second valve element (30) has two pressure application surfaces (40, 60) pointing in the opposite direction from each other,
**characterised in that**,
the second valve element (30) can come in contact with the first valve element (20).

2. Pressure valve and pressure regulator (10) according to claim 1, **characterised in that** the spring force of the at least one spring (21) can be adjusted.

3. Pressure valve and pressure regulator (10) according to claim 1 or 2, **characterised in that** the first valve element (20) is a linear spool valve.

4. Pressure valve and pressure regulator (10) according to claim 1, 2 or 3, **characterised in that** the second valve element (30) corresponds to a volumetric flask.

5. Pressure valve and pressure regulator (10) according to one of the preceding claims, **characterised in that** both valve elements (20, 30) are mounted flexibly along an axial direction.

6. Pressure valve and pressure regulator (10) according to one of the preceding claims, **characterised in that** the second inflow opening (13) leads to the first pressure application surface (40) of the second valve element (30) and the first inflow opening (12) leads to the pressure application surface (50) of the first valve element (20).

7. Pressure valve and pressure regulator (10) according to one of the preceding claims, **characterised in that** the outflow opening (11) is shut by the first valve element (20) when the valve is in the idle position.

8. Pressure valve and pressure regulator (10) according to one of the preceding claims, **characterised in that**, during switching, there is a through-flow between the first inflow opening (12) and the outflow opening (11).

9. Pressure valve and pressure regulator (10) according to one of the preceding claims, **characterised in that** the surface of the first pressure application surface (40) of the second valve element (30) is larger than the pressure application surface (50) of the first valve element (20).

10. Pressure valve and pressure regulator (10) according to one of the preceding claims, **characterised in that** the surface of the first pressure application surface (40) of the second valve element (30) is larger than the second pressure application surface (60) of the second valve element (30).

11. Pressure valve and pressure regulator (10) according to one of the preceding claims, **characterised in that** the first valve element (20) has a bore-hole (22) in the longitudinal direction.

## Revendications

1. Dispositif de valve de pression ou de régulation de pression (10), pour des fluides quelconques de transmission de pression, comportant un bloc de valves (15) et/ou une valve cartouche, qui comprend au moins une première et une deuxième ouvertures d'entrée (12, 13) et une ouverture de sortie (11), et comportant au moins deux éléments de valve (20, 30), logés en étant mobiles à l'intérieur du bloc de valves (15), le premier élément de valve (20) offrant une surface d'attaque de pression (50) agissant à l'encontre d'au moins un ressort (21), et le deuxième élément de valve (30) comprenant deux surfaces d'attaque de pression (40, 60) dirigées en sens contraires, **caractérisé en ce que** le deuxième élément de valve (30) peut être mis en contact avec le premier élément de valve (20).

2. Dispositif de valve de pression ou de régulation de pression (10) selon la revendication 1, **caractérisé en ce que** la tension de ressort du ou des ressorts (21) est réglable.

3. Dispositif de valve de pression ou de régulation de pression (10) selon la revendication 1 ou 2, **caractérisé en ce que** le premier élément de valve (20) est un tiroir longitudinal.

4. Dispositif de valve de pression ou de régulation de pression (10) selon la revendication 1, 2 ou 3, **caractérisé en ce que** le deuxième élément de valve (30) correspond à un ballon gradué.

5. Dispositif de valve de pression ou de régulation de pression (10) selon l'une des revendications précédentes, **caractérisé en ce que** les deux éléments de valve (20, 30) sont logés en étant mobiles le long d'une direction axiale.

6. Dispositif de valve de pression ou de régulation de pression (10) selon l'une des revendications précédentes, **caractérisé en ce que** la deuxième ouverture d'entrée (13) conduit vers la première surface d'attaque de pression (40) du deuxième élément de valve (30), et la première ouverture d'entrée (12) conduit vers la surface d'attaque de pression (50) du premier élément de valve (30).

7. Dispositif de valve de pression ou de régulation de pression (10) selon l'une des revendications précédentes, **caractérisé en ce que** l'ouverture de sortie (11) est, en position de repos de la valve, obturée par le premier élément de valve (20).

8. Dispositif de valve de pression ou de régulation de pression (10) selon l'une des revendications précédentes, **caractérisé en ce que**, en position de marche, il existe un écoulement entre la première ouverture d'entrée (12) et l'ouverture de sortie (11).

9. Dispositif de valve de pression ou de régulation de pression (10) selon l'une des revendications précédentes, **caractérisé en ce que** l'aire de la première surface d'attaque de pression (40) du deuxième élément de valve (30) est supérieure à celle de la surface d'attaque de pression (50) du premier élément de valve (20).

10. Dispositif de valve de pression ou de régulation de pression (10) selon l'une des revendications précédentes, **caractérisé en ce que** l'aire de la première surface d'attaque de pression (40) du deuxième élément de valve (30) est supérieure à celle de la deuxième surface d'attaque de pression (60) du deuxième élément de valve (30).

11. Dispositif de valve de pression ou de régulation de pression (10) selon l'une des revendications précédentes, **caractérisé en ce que** le premier élément de valve (20) comprend un alésage (22) dans la direction longitudinale.
